# FASCICULE DE BREVET EUROPEEN

(11) **EP 0 934 509 B1**
(45) Date de publication et mention de la délivrance du brevet: **15.01.2003**
(21) Numéro de dépôt: 97912267.8
(22) Date de dépôt: 28.10.1997
(51) Int. Cl.: G01F 1/66

(54) **COMPTEUR DE FLUIDE A ULTRASONS A RESISTANCE AMELIOREE AUX ONDES ULTRASONORES PARASITES**
ULTRASCHALLDURCHFLUSSMESSER MIT VERBESSERTER ABSCHIRMUNG GEGEN PARASITÄRE ULTRASCHALLWELLEN
ULTRASONIC FLUID METER WITH IMPROVED RESISTANCE TO PARASITIC ULTRASONIC WAVES

(30) Priorité: 28.10.1996 FR 9613218; 27.06.1997 FR 9708254
(43) Date de publication de la demande: 11.08.1999
(73) Titulaire: SCHLUMBERGER INDUSTRIES S.A., 92120 Montrouge (FR)
(72) Inventeur: FROELICH, Benoît, 145-071 Tokyo (JP); LAVRUT, Eric, F-45000 Orleans (FR); HOCQUET, Philippe, N-0362 Oslo (NO)
(74) Mandataire: Feray, Valérie
(86) Numéro de dépôt international: FR9701926
(87) Numéro de publication internationale: WO98019138

(56) Documents cités:
- EP-A- 0 048 791
- EP-A- 0 088 235
- EP-A- 0 451 355
- EP-A- 0 457 999
- DE-U- 9 201 844
- GB-A- 2 276 242
- US-A- 4 098 117

## Description

L'invention est relative à un compteur de fluide à ultrasons comprenant des transducteurs ultrasonores définissant entre eux un trajet de mesure ultrasonore et émettant et recevant des ondes ultrasonores dans le fluide le long dudit trajet de mesure suivant au moins une fréquence ultrasonore.

Il est connu depuis de nombreuses années de mesurer la vitesse d'un fluide en écoulement en émettant à partir de transducteurs ultrasonores des ondes ultrasonores dans le fluide dans le sens d'écoulement dudit fluide et en sens opposé et en mesurant les temps de propagation respectifs des ondes émises dans les deux sens.

A partir de la mesure de la vitesse du fluide, on détermine aisément son débit ainsi que le volume de fluide qui s'est écoulé au bout d'un temps donné.

Cependant, dans de tels compteurs de fluide, la Demanderesse a pu constater que des ondes ultrasonores dites "parasites" se propagent et perturbent la réception par l'un des transducteurs des ondes ultrasonores émises par l'autre transducteur le long du trajet de mesure.

On peut citer deux types différents d'ondes ultrasonores parasites : des ondes ultrasonores générées par une source extérieure au compteur de fluide et des ondes ultrasonores émises par les transducteurs eux mêmes.

Le premier type se rencontre par exemple lorsqu'un régulateur de pression est installé en amont d'un compteur de gaz.

On sait que des régulateurs de pression peuvent, par exemple, réduire la pression d'un gaz de plusieurs bars à environ 20mbars en amont de compteurs de gaz à ultrasons.

Or, la chute de pression dans le régulateur est une source de bruit considérable et l'on a pu constater qu'une telle chute de pression peut donner naissance à des ondes ultrasonores parasites ayant une grande amplitude de pression et dont la (ou les) fréquence(s) correspond(ent) à celle(s) des transducteurs ultrasonores du compteur.

Ces ondes ultrasonores parasites sont transmises par l'écoulement du fluide jusqu'aux transducteurs ultrasonores. Il en résulte des erreurs de mesure considérables et tout à fait inacceptables.

Le premier type peut également se rencontrer dans des compteurs de liquide à ultrasons qui sont placés en aval d'une brusque réduction de section de passage pouvant donner naissance à un phénomène dit de cavitation et à l'apparition de bulles dans le liquide à une fréquence voisine de celle utilisée dans les transducteurs ultrasonores.

Le second type d'ondes ultrasonores parasites correspond à celui où les transducteurs ultrasonores définissent entre eux un trajet de mesure ultrasonore à l'intérieur d'un conduit (tube,...) véhiculant le fluide dont on cherche à déterminer le débit et qui est réalisé dans un matériau dont la rigidité n'est pas snffisante pour empêcher un couplage acoustique entre le milieu fluide et ledit matériau.

Ceci est par exemple le cas lorsque le conduit est métallique (acier...) et lorsque le milieu fluide est l'eau ou bien avec un conduit en plastique et un fluide gazeux.

Dans de tels cas, lorsque des ondes ultrasonores sont émises d'un transducteur vers l'autre transducteur à l'intérieur du conduit de mesure, une partie de ces ondes appelées ondes ultrasonores parasites se propagent dans le matériau constituant ledit conduit de mesure et atteignent l'autre transducteur avant ou en même temps que celui-ci reçoit les ondes ultrasonores propagées par le milieu fluide.

Ainsi, il devient très difficile de différencier dans les ondes ultrasonores reçues par l'autre transducteur celles qui se sont effectivement propagées dans le milieu fluide de celles qui se sont propagées dans le matériau constitutif du conduit de mesure.

Le document EP-A-0 457 999 décrit un débitmètre ultrasonore comprenant un conduit dans lequel s'écoule le fluide dont on veut déterminer le débit et deux transducteurs situés à fextérieur du conduit. Les ondes ultrasonores générées ou reçues par les transducteurs sont transmises au fluide ou reçues du fluide respectivement, par l'intermédiaire de disques associés aux transducteurs et de parties de paroi situées en regard des transducteurs. Le dispositif décrit comprend des absorbeurs ou des couples de rainures/saillies dont le but est de découpler entre elles les parties de paroi situées en regard des transducteurs.

On connaît d'après le document FR-A-2 357 869 des moyens d'atténuation d'ondes acoustiques générées extérieurement à un compteur de fluide à ultrasons et qui sont réalisés sous la forme d'un manchon en matériau acoustiquement isolant placé dans la tubulure d'amenée du fluide au compteur.

Cependant, de tels moyens d'atténuation sont insuffisants et, en outre, ne permettent pas d'atténuer le second type d'ondes ultrasonores parasites.

On connaît également d'après le document EP-A-0 048 791 un dispositif de suppression des ondes ultrasonores émises par les transducteurs à l'extérieur du tube de mesure. Toutefois, un tel dispositif ne permet pas d'atténuer les ondes ultrasonores qui se propagent dans la paroi du tube de mesure et, de plus, n'atténue pas les ondes ultrasonores parasites du premier type.

La présents invention vise donc à remédier à ce problème en atténuant de manière simple et efficace les ondes ultrasonores parasites qui se propagent dans un compteur de fluide à ultrasons et qui perturbent la réception par l'un des transducteurs des ondes ultrasonores émises par l'autre transducteur le long du trajet de mesure.

La présente invention a ainsi pour objet un compteur de fluide à ultrasons comprenant des transducteurs ultrasonores placés au contact du fluide, définissant entre eux un trajet de mesure ultrasonore et émettant et recevant des ondes ultrasonores dans le fluide le long dudit trajet de mesure suivant au moins une fréquence ultrasonore, des moyens d'atténuation des ondes ultrasonores dites parasites, de longueur d'onde λ, qui perturbent la réception par l'un des transducteurs des ondes ultrasonores émises par l'autre transducteur, caractérisé en ce que les moyens d'atténuation sont constitués par au moins un passage dans lequel s'écoule le fluide et dans lequel lesdites ondes parasites se propagent suivant une direction principale qui correspond à une dimension dite longitudinale a dudit passage, ledit passage ayant une dimension transversale b perpendiculaire à la dimension a et qui est très inférieure à la longueur d'onde λ des ondes parasites dans le milieu de propagation, ledit passage comprenant une pluralité de portions de passage consécutives ayant chacune une partie qui présente une réduction de la section de passage transversale suivant la dimension b du passage, la dimension longitudinale de chaque portion de passage étant sensiblement égale à λ/2.

Ainsi, les ondes ultrasonores parasites qui se propagent dans le milieu de propagation principalement suivant la dimension longitudinale du passage rencontrent sur leur chemin des réductions de section de passage alternées avec des sections de passage "normales", ce qui a pour effet de créer une rupture d'impédance acoustique dans le milieu, donc de réfléchir une partie de l'énergie contenue dans ces ondes, provoquant ainsi une atténuation de l'amplitude de ces ondes. Les ondes ultrasonores parasites qui ne se propagent pas suivant la dimension longitudinale du passage mais qui rencontrent malgré tout des sections de passage réduites sur leur chemin sont également atténuées. Selon une caractéristique de l'invention, le passage est délimité par au moins deux surfaces longitudinales en regard écartées suivant la dimension b, et sur au moins l'une desquelles sont pratiquées transversalement une pluralité de rainures consécutives parallèles entre elles et alternées avec des saillies, un couple de rainure/saillie étant disposées au droit de chaque portion de passage.

Chaque rainure a par exemple un profil en forme de V ou un profil en forme de U formant ainsi sur ladite surface des créneaux.

Selon une variante de réalisation, la longueur d'onde des ondes parasites varie à l'intérieur d'une gamme déterminée, et la dimension longitudinale des portions de passage varie de manière croissante ou décroissante pour couvrir la gamme de longueurs d'onde déterminée.

Selon un premier aspect de l'invention, le compteur de fluide comprend une enceinte munie d'un orifice d'amenée du fluide et d'un orifice d'évacuation du fluide, un bloc de mesure équipé des transducteurs ultrasonores et pourvu d'au moins deux ouvertures permettant respectivement au fluide d'arriver jusqu'au trajet de mesure ultrasonore et de s'en éloigner, le(s) passage(s) dans le(s)quel(s) les ondes ultrasonores parasites se propagent est(sont) aménagé(s) entre au moins l'un des orifices d'amenée et d'évacuation du fluide et le trajet de mesure.

Selon un premier mode de réalisation de l'invention, le bloc de mesure est agencé à l'intérieur de ladite enceinte de manière à ménager entre ces derniers le (ou les) passages) dans le(s)quel(s) les ondes ultrasonores parasites se propagent et que le fluide emprunte avant d'entrer dans le bloc de mesure ou après en être sorti.

La surface sur laquelle sont pratiquées les rainures est, par exemple, celle du bloc de mesure.

Selon un deuxième mode de réalisation, le bloc de mesure comprend le(s) passage(s) qui permet(tent) d'atténuer les ondes ultrasonores parasites et qui est (sont) aménagé(s) entre au moins l'une desdites ouvertures et ledit trajet de mesure, le(s)dit(s) passage(s) servant également à véhiculer le fluide.

Selon d'autres caractéristiques de l'invention :
- le trajet de mesure est réalisé à l'intérieur d'un conduit de mesure,
- le conduit de mesure est au moins partiellement disposé dans un logement du bloc de mesure,
- le(s) passage(s) est(sont) aménagé(s) entre les parois du logement et le conduit de mesure,
- le(s) passage(s) est(sont) aménagé(s) autour du conduit,
- le(s) passage(s) est(sont) aménagé(s) d'un seul côté du conduit de mesure,
- les passages sont aménagés de part et d'autre du conduit de mesure,
- le bloc de mesure comporte du côté où est(sont) aménagé(s) le(s) passage(s) une paroi dite séparatrice qui sépare le conduit de mesure du (des) passage(s),
- le bloc de mesure comporte une autre paroi qui est disposée en regard de la paroi séparatrice de manière à ce que les surfaces en regard de ces deux parois délimitent le(s) passage(s),
- l'autre paroi est une pièce rapportée sur le bloc de mesure,
- des couples de rainures/saillies sont pratiquées sur la surface extérieure du bloc de mesure,
- le(s) passage(s) est (sont) aménagé(s) le long d'au moins une partie du trajet de mesure,
- le(ou les) passage(s) est(sont) disposé(s) à l'intérieur du conduit de mesure.

Selon un deuxième aspect de l'invention, le compteur de fluide comprend un conduit de mesure qui constitue au moins partiellement le trajet de mesure ultrasonore et qui possède au moins une paroi périphérique qui correspond au passage dans lequel les ondes ultrasonores parasites se propagent.

La surface sur laquelle sont pratiquées les rainures est la surface extérieure du conduit de mesure, la réduction de section de passage de chaque portion de passage étant localisée au droit de chaque rainure dans ladite paroi.

Le conduit de mesure est par exemple un tube.

Les rainures ont une forme annulaire et sont disposées le long du tube.

A titre de variante, une rainure de forme hélicoïdale est pratiquée sur la surface extérieure du tube de mesure.

Avantageusement, le tube de mesure peut être vissé dans un logement prévu dans le bloc de mesure

D'autres caractéristiques et avantages apparaîtront à la lecture de la description qui va suivre, donnée uniquement à titre d'exemple non limitatif, et faite en référence aux dessins annexés sur lesquels :
- la figure 1 est une vue d'un compteur de fluide selon l'invention dont une partie du couvercle a été enlevée, pour permettre de mieux comprendre l'invention,
- la figure 2 est une vue de l'intérieur du bloc de mesure représenté sur la figure 1,
- la figure 3 est une vue en coupe suivant A-A du compteur représenté à la figure 1,
- les figures 4a, 4b et 4c sont des vues schématiques partielles des moyens d'atténuation représentés à la figure 3 selon différentes variantes de réalisation,
- la figure 4d représente trois courbes A, B, C, qui traduisent le pouvoir d'atténuation R des moyens d'atténuation selon l'invention respectivement dans trois gaz différents et en fonction de la fréquence des ondes parasites,
- la figure 5 est une vue schématique partielle des moyens d'atténuation représentés à la figure 3 selon une variante de réalisation supplémentaire,
- la figure 6 est une vue analogue à celle de la figure 3 mais dans laquelle le fluide s'écoule en sens inverse,
- la figure 7 est une vue d'un compteur de fluide selon un deuxième mode de réalisation de l'invention,
- la figure 8 est une vue en section transversale du bloc de mesure représenté à la figure 7,
- la figure 9 est une vue d'une première variante de réalisation du bloc de mesure des figures 7 et 8,
- la figure 10 est une vue d'une deuxième variante de réalisation du bloc de mesure représenté aux figures 7 et 8,
- la figure 11 est une vue partielle en perspective d'un bloc de mesure selon une troisième variante de réalisation,
- la figure 12 est une vue en coupe longitudinale du bloc de mesure de la figure 11,
- la figure 13 est une vue partielle en coupe longitudinale d'un bloc de mesure selon une quatrième variante de réalisation,
- la figure 14 est une vue partielle en coupe longitudinale d'un bloc de mesure selon une cinquième variante de réalisation,
- la figure 15 est une vue en coupe longitudinale d'un bloc de mesure selon une sixième variante de réalisation,
- la figure 16a est une vue en section transversale du bloc de mesure représenté à la figure 15,
- la figure 16b est une variante du bloc de mesure représenté à la figure 16a,
- la figure 17 est une vue en coupe longitudinale d'un bloc de mesure selon une septième variante de réalisation,
- la figure 18 est une vue agrandie en section transversale du bloc de mesure représenté à la figure 17,
- la figure 19 est une vue partielle en coupe longitudinale d'un bloc de mesure selon une hûitième variante de réalisation,
- la figure 20 est une vue partielle en coupe longitudinale d'un bloc de mesure selon une neuvième variante de réalisation.
- la figure 21a représente un bloc de mesure d'un compteur de fluide selon un autre mode de réalisation de l'invention,
- la figure 21b représente une vue agrandie du conduit de mesure représenté à la figure 21a,
- la figure 21c est une vue schématique d'une variante de réalisation du conduit de mesure représenté à la figure 21a,
- la figure 22a est une vue d'un conduit de mesure selon une autre variante de réalisation du conduit de mesure représenté à la figure 21a,
- le figure 22b est une vue représentant le conduit de mesure de la figure 22a intégré dans un bloc de mesure d'un compteur de fluide selon l'invention.

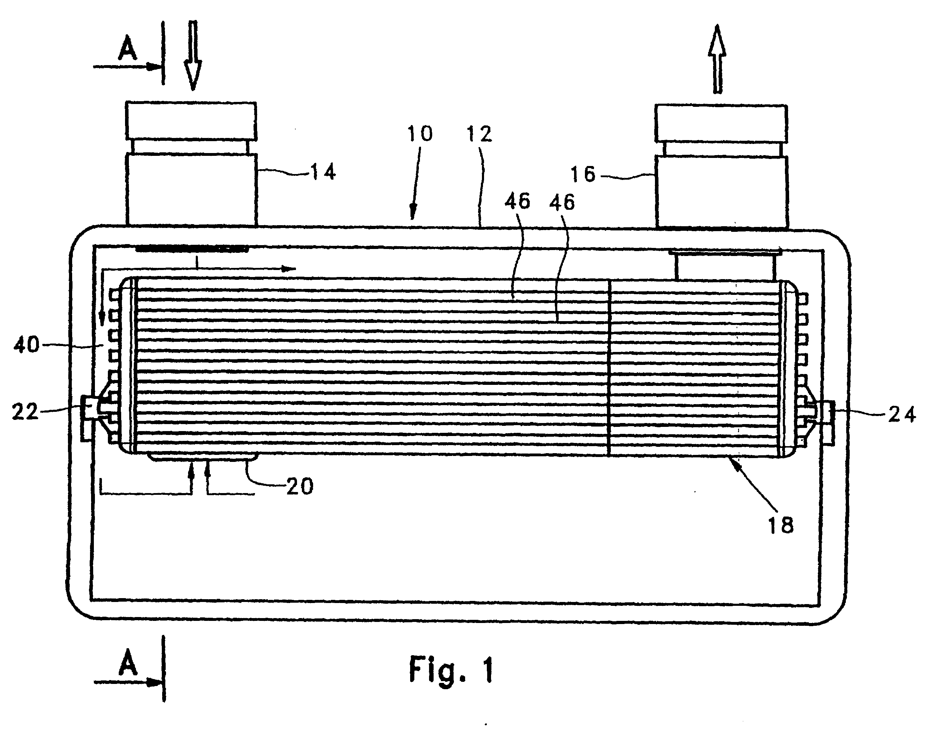

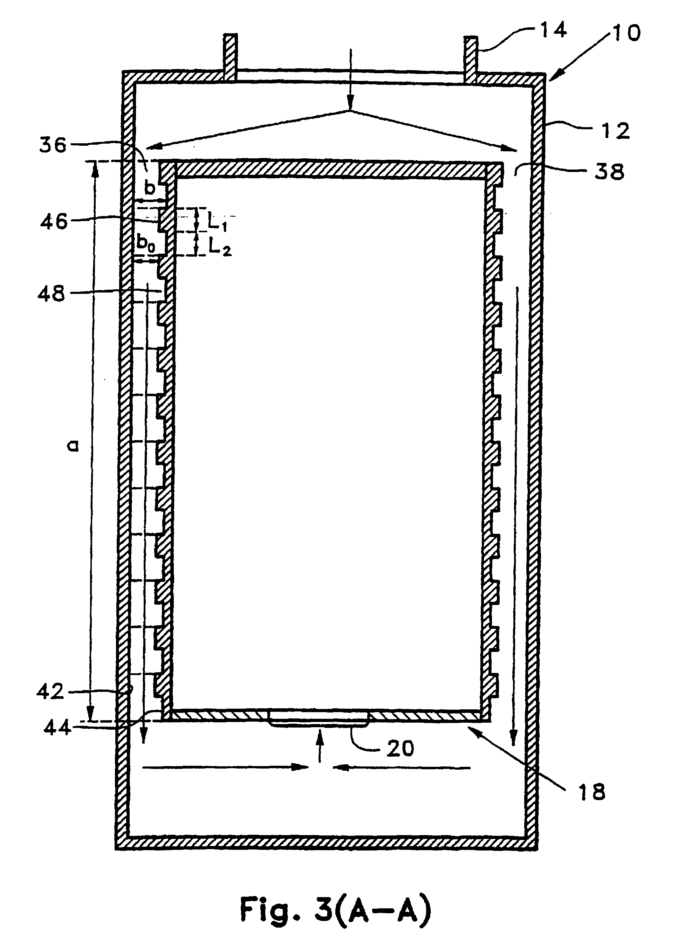

La figure 1 représente un compteur de gaz disposé en aval d'un régulateur de pression, non représenté sur cette figuré, qui génère dans la canalisation et dans le compteur de gaz des ondes ultrasonores parasites à une fréquence par exemple égale à 40kHz qui perturbent la mesure du débit de gaz.

Comme représenté sur cette figure, le compteur de gaz désigné par la référence générale notée 10 comprend une amenée de gaz 14 et une évacuation de gaz 16, une enceinte 12 à laquelle sont raccordées lesdites amenée et évacuation, et un bloc de mesure 18 disposé à l'intérieur de l'enceinte 12. Le bloc de mesure 18 est agencé à l'intérieur de l'enceinte 12 de manière à ménager entre ces derniers un ou plusieurs passages que le fluide emprunte pour parvenir de l'amenée 14 jusqu'à une ouverture 20, pratiquée dans la partie inférieure du bloc de mesure.

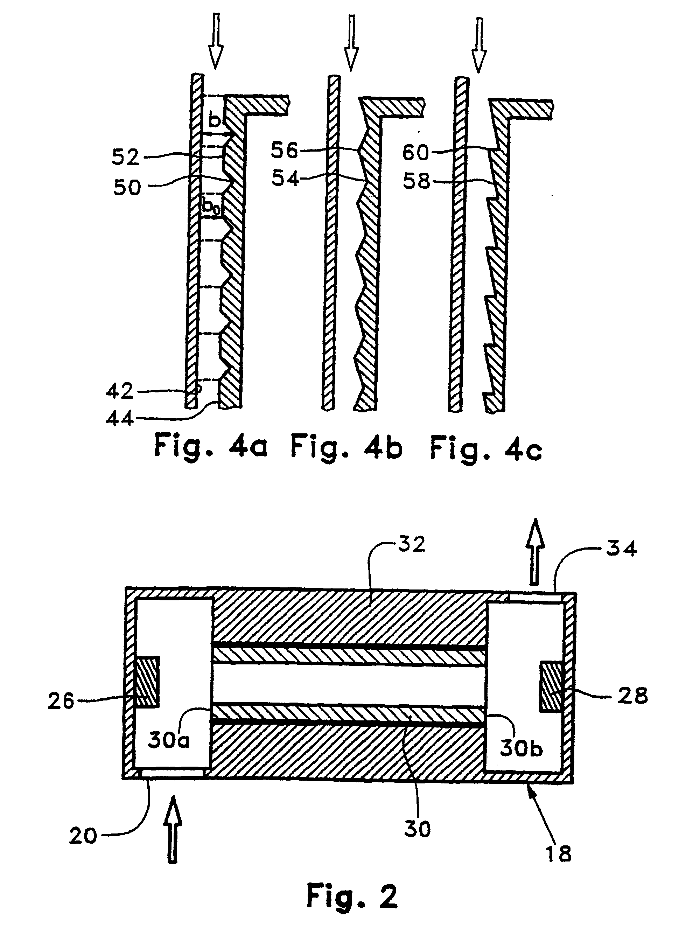

Le bloc de mesure 18 est maintenu en position à l'intérieur de l'enceinte 12 par deux butées 22, 24 qui sont logées dans des renfoncements aménagés dans ladite enceinte 12. Comme représenté à la figure 2, le bloc de mesure 18 comprend l'ouverture 20 par laquelle pénètre le gaz ainsi que deux transducteurs ultrasonores 26, 28 disposés chacun en regard d'une des extrémités opposées d'un conduit de mesure 30 de forme tubulaire et qui constitue le trajet de mesure ultrasonore.

Les transducteurs ultrasonores fonctionnent par exemple à une fréquence de 40kHz.

Le conduit de mesure 30 traverse une paroi 32 formant un bloc massif qui sépare deux logements à l'intérieur desquels sont disposés les transducteurs 26, 28. Le gaz pénètre dans un des logements du bloc de mesure 18 par l'ouverture 20, comme indiqué par la flèche de la figure 2, s'engouffre dans le tube de mesure 30 par l'extrémité 30a dudit tube, parcourt l'intérieur de celui-ci, sort de ce tube par l'extrémité opposée 30b et ensuite est évacué vers le haut par l'orifice de sortie 34. L'orifice de sortie 34 est relié à une évacuation de gaz 16 repérée sur la figure 1.

Dans le compteur de gaz à ultrasons précédemment décrit les transducteurs ultrasonores 26, 28 émettent et reçoivent alternativement des ondes ultrasonores à une fréquence ultrasonore fixe et à partir des ondes ultrasonores reçues par chacun desdits transducteurs, on en déduit le temps de propagation de ces ondes et donc le débit de fluide.

En présence d'un régulateur placé en amont du compteur de gaz, les ondes ultrasonores parasites précédemment mentionnées, se propagent dans le compteur, parviennent jusqu'au trajet de mesure ultrasonore à l'intérieur du bloc de mesure 18, se mélangent aux ondes ultrasonores émises et reçues par les transducteurs et donc perturbent fortement la mesure ultrasonore du débit.

Les passages précédemment mentionnés sont spécifiquement conçus pour exercer un effet d'atténuation sur les ondes ultrasonores parasites présentes dans l'écoulement de gaz et qui vont atteindre le trajet de mesure ultrasonore. Chacun des passages 36, 38 (Fig.3) et 40 (Fig.1) possède une dimension dite longitudinale a.

L'écoulement de gaz se propage suivant cette dimension longitudinale ainsi que les ondes ultrasonores parasites présentes dans l'écoulement. Pour que l'effet d'atténuation sur les ondes ultrasonores parasites qui se propagent selon cette direction, appelée direction principals, soit efficace, il est nécessaire que chacun des passages précédemment cités, possède une dimension transversale b, perpendiculaire à la dimension longitudinale a qui soit très inférieure à la longueur d'onde λ des ondes parasites dans le milieu fluide dans lequel les ondes parasites se propagent.

En effet, cette condition garantit que seul le mode plan de l'onde ultrasonore se propage à l'intérieur du passage et c'est donc ce mode plan qui va se trouver affecté par les moyens d'atténuation selon l'invention.

Au contraire, si les valeurs de la dimension transversale b du passage et de la longueur d'onde λ dans le milieu fluide sont trop proches ou si b est supérieur à λ, des modes de propagation d'ondes ultrasonores parasites autres que le mode plan apparaissent et diminuent ainsi l'efficacité des moyens d'atténuation.

Le passage 36 est délimité par au moins deux surfaces longitudinales 42, 44 disposées en regard l'une de l'autre et écartées suivant la dimension transversale b dudit passage, ainsi que représenté sur la figure 3.

Au moins l'une de ces surfaces longitudinales 42, 44 est agencée de manière à ce que le passage comprenne une pluralité de portions de passage consécutives, délimitées par des pointillés sur la figure 3, ayant chacune une partie qui présente une réduction de section de passage transversale suivant la dimension b du passage. La surface sur laquelle est réalisé l'agencement particulier est celle du bloc de mesure 18.

Sur la surface extérieure 44 du bloc de mesure, des saillies 46 ont été réalisées par exemple par surmoulage. Ces saillies 46 sont parallèles entre elles, perpendiculaires à la dimension longitudinale a du passage et ménagent entre elles des rainures 48 également parallèles entre elles.

Il convient de noter qu'au lieu de former des saillies sur la surface extérieure 44 du bloc de mesure 18, il aurait également été possible d'usiner cette surface de manière à aménager une pluralité de rainures consécutives parallèles entre elles et perpendiculaires à la dimension longitudinale a du passage 36.

A chaque portion de passage correspondent une saillie 46 et une rainure 48 disposées côte à côte.

La saillie 48 possède une dimension longitudinale notée L₁ sur la figure 3 et chaque rainure 48 possède une dimension longitudinale notée L₂.

La dimension transversale du passage au droit de chaque rainure 48 est égale à b, et la dimension transversale du passage au droit de chaque saillie 46 est égale à bo.

Pour que les moyens d'atténuation selon l'invention atténuent la longueur d'onde souhaitée, des ondes ultrasonores parasites, il faut que la dimension longitudinale de chaque portion de passage, qui est égale à L1 + L2, soit sensiblement égale à λ/2.

Il convient de remarquer que les dimensions L1 et L2 peuvent varier tout en respectant la formule précédemment citée.

Comme représenté sur la figure 3, chaque rainure 48 a un profil longitudinal en forme de U formant ainsi sur la surface longitudinale 44 des créneaux.

L'atténuation de l'amplitude des ondes ultrasonores parasites qui se propagent dans le passage 36 a lieu à chaque fois que lesdites ondes rencontrent une section de passage réduite au droit de chaque saillie 46.

Lorsque la dimension transversale du passage au droit de chaque saillie 46 diminue par rapport à la dimension transversale b au droit de chaque rainure 48, on observe une efficacité plus accrue des moyens d'atténuation mais il convient toutefois de ne pas dépasser certaines valeurs qui pourraient occasionner des pertes de charges trop élevées dans l'écoulement de gaz.

Comme représenté sur la figure 3, le motif ainsi formé sur la surface longitudinale 44 est périodique.

A titre d'exemple numérique, L1 = L2 = 2,5mm, les dimensions bo et b du passage sont respectivement égales à 2 et 3mm et la longueur totale du passage est égale à 60mm, ce qui correspond à 12 périodes.

Pour différents gaz et notamment pour un mélange d'air et de méthane, une atténuation de plus de 40 décibels par décade a été obtenu avec une largeur de bande de 12 kHz. Pour le méthane, la longueur d'onde λ des ondes parasites est égale à 11mm qui est bien supérieure aux dimensions b et bo.

L'efficacité de ces moyens d'atténuation peut être augmentée si des saillies et des nervures sont également aménagées sur la surface 42 en vis-à-vis respectivement des saillies 46 et des rainures 48 de la surface 44 du bloc de mesure 18.

Il convient de remarquer que pour une même efficacité d'atténuation les rainures/saillies pourraient être uniquement aménagées sur la surface intérieure 42 de l'enceinte 12.

La figure 4a représente une première variante de réalisation des moyens d'atténuation représentés à la figure 3 et sur laquelle une pluralité de rainures 50 consécutives, parallèles entre elles, sont pratiquées transversalement sur la surface longitudinale 44 du bloc de mesure, et de préférence perpendiculairement à la direction de propagation de l'écoulement dans le passage.

Chaque rainure 50 a un profil en forme de V et deux rainures consécutives 50 sont séparées par une partie de portion passage 52 de profil essentiellement plat et qui constitue la partie dans laquelle la section de passage offerte au fluide et aux ondes ultrasonores parasites est réduite.

La figure 4b représente une autre variante de réalisation dans laquelle les rainures 54 occupent la majeure partie de chacune des portions de passage consécutives et les parties de chaque portion de passage qui présentent une réduction de la section de passage transversale, parties référencées 56, sont limitées à une arrête.

La figure 4c représente encore une autre variante de réalisation des moyens d'atténuation selon l'invention, dans laquelle les rainures 58 sont formées par des pentes inclinées parallèles entre elles et séparées l'une de l'autre par un front droit, au droit duquel se trouve la partie de la portion de passage de section réduite 60. Le profil longitudinal de la surface 44 est en dents de scie.

A chaque fois que l'on conçoit des moyens d'atténuation, ceux-ci sont adaptés tout particulièrement à un gaz et, si l'on veut couvrir une large gamme de longueurs d'onde, afin par exemple que le compteur puisse s'adapter à plusieurs types de gaz, il faut prévoir une configuration particulière des passages précédemment mentionnés 36, 38 et 40.

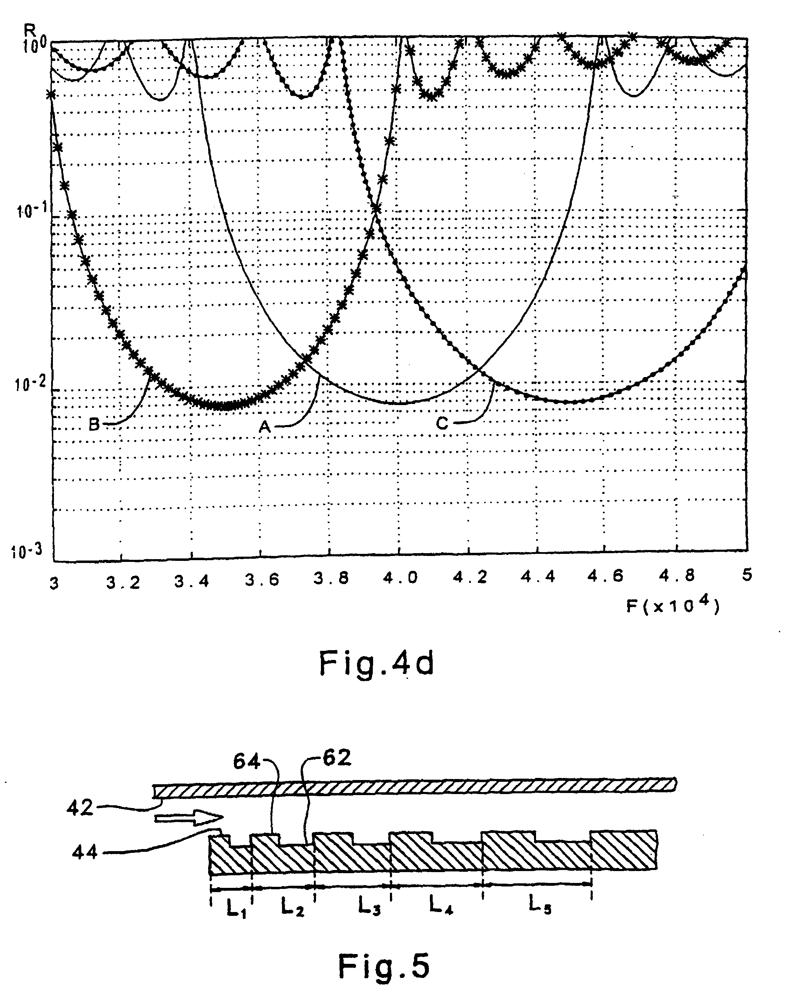

En effet, sur la figure 4d, sont représentées trois courbes A, B, C, exprimant le rapport R des amplitudes des ondes ultrasonores parasites entre l'entrée et la sortie d'un passage tel que celui représenté sur les figures 1 et 3 (36, 38 ou 40) en fonction de la fréquence ultrasonore F.

Chaque courbe se présente sous la forme d'une arche inversée de forme parabolique accompagnée de plusieurs arches de petites dimensions.

Ainsi, en concevant les passages de la figure 3 pour atténuer des ondes ultrasonores parasites de fréquence égale à 40kHz dans un mélange d'air et de méthane on obtient, par le calcul, la courbe A qui présente un pouvoir d'atténuation maximal à la fréquence de 40kHz.

Toutefois, si l'on remplace le mélange d'air et de méthane par de l'air seul (courbe B) ou du méthane seul (courbe C) on s'aperçoit que le passage de la figure 3 n'est pas optimal dans ces gaz à la fréquence de 40kHz.

La variante de réalisation représentée à la figure 5 illustre la possibilité d'avoir une configuration particulière des passages 36,38 et 40.

Sur cette figure, les surfaces 42 et 44 en regard délimitent un passage pour l'écoulement de gaz et pour les ondes ultrasonores parasites. Dans ce passage, des rainures 62 et des saillies 64 analogues à celles représentées sur la figure 3 sont aménagées sur la surface longitudinale 44.

Ainsi que cela apparaît sur cette figure 5, la dimension longitudinale des portions de passage varie de manière croissante depuis l'entrée du passage jusqu'à la sortie du passage afin de couvrir une gamme de longueurs d'onde de gaz déterminée.

Il est par exemple possible de couvrir une gamme de longueurs d'onde qui s'étend de 8,75mm (air) à 11mm (méthane).

En pratique, la (ou les) portion(s) de passage située(s) près de l'entrée a(ont) une dimension longitudinale égale à λ air/2 et, près de la sortie, la (ou les) portion(s) a(ont) une dimension longitudinale égale à λ méthane/2. Entre l'entrée et la sortie, les portions de passage ont une dimension longitudinale qui croît, plusieurs portions de passage consécutives pouvant avoir la même dimension longitudinale.

Il convient de noter que l'on peut également aménager le passage de manière à ce que les portions de passage voient leur dimension longitudinale varier de manière décroissante depuis l'entrée du passage jusqu'à la sortie dudit passage.

Il convient de remarquer que lorsque l'on conçoit des moyens d'atténuation qui peuvent s'adapter à plusieurs types de gaz, l'effet d'atténuation obtenu est inférieur à celui obtenu pour des moyens d'atténuation particulièrement adaptés à un type de gaz. Par exemple, on passe d'un taux d'atténuation de 40dB pour des moyens d'atténuation particulièrement adaptés à un type de gaz à un taux d'atténuation de 25dB pour un agencement tel que celui représenté sur la figure 5.

Bien que les rainures et les saillies soient disposées perpendiculairement à la direction principale de propagation des ondes ultrasonores parasites dans les exemples précités, ceci n'est pas une condition obligatoire. Cependant, les rainures et les saillies doivent avoir une disposition non parallèle à la direction principale de propagation des ondes parasites pour que celles-ci soient affectées par une réduction de la section de passage transversale au droit de chaque saillie.

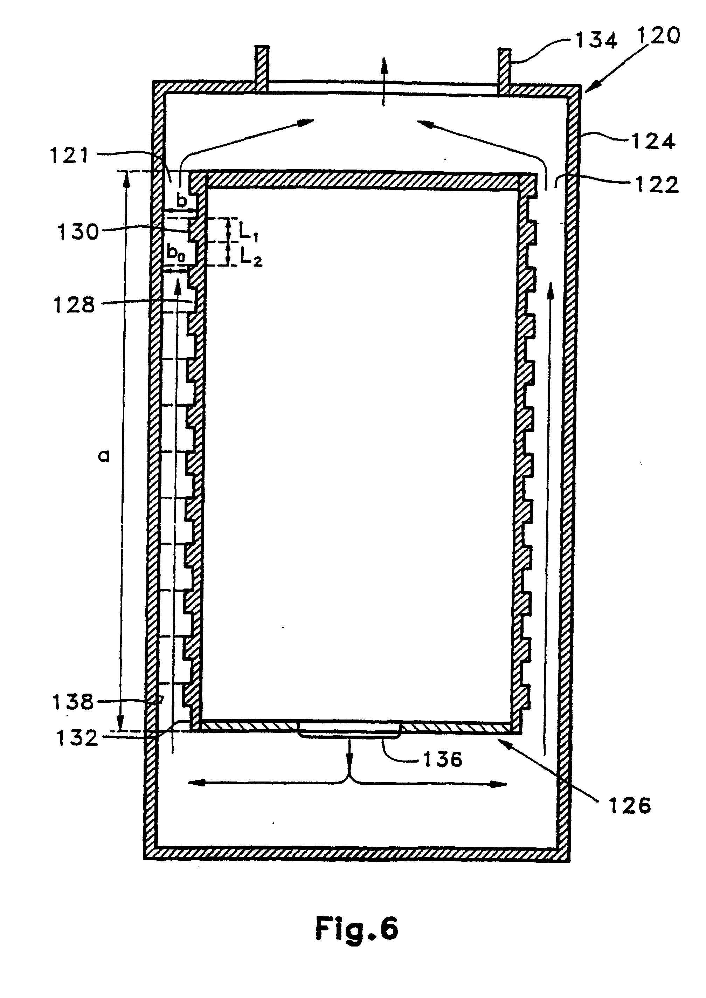

La figure 6 représente schématiquement une autre configuration de compteur 120 dans lequel des passages 121, 122 servant de moyens d'atténuation des ondes ultrasonores parasites et possédant les mêmes caractéristiques que ceux 36, 38, 40 décrits en référence aux figures 1, 3, 4a-d et 5 sont aménagés entre l'enceinte 124 du compteur de fluide et le bloc de mesure 126. Des rainures 128 et des saillies 130 sont alternativement formées sur la surface 132 du bloc de mesure. Dans ce cas de figure, la source de bruit extérieure au compteur est placée en aval dudit compteur et les passages 121, 122 sont donc disposés entre l'ouverture de sortie 136 du bloc de mesure 126 et l'orifice d'évacuation 134. Là aussi, la surface intérieure 138 de l'enceinte 120 placée en regard de la surface 132 du bloc de mesure pourrait comporter une altemance de saillies et de rainures pour accroître l'efficacité d'atténuation.

Un deuxième mode de réalisation de l'invention va maintenant être décrit.

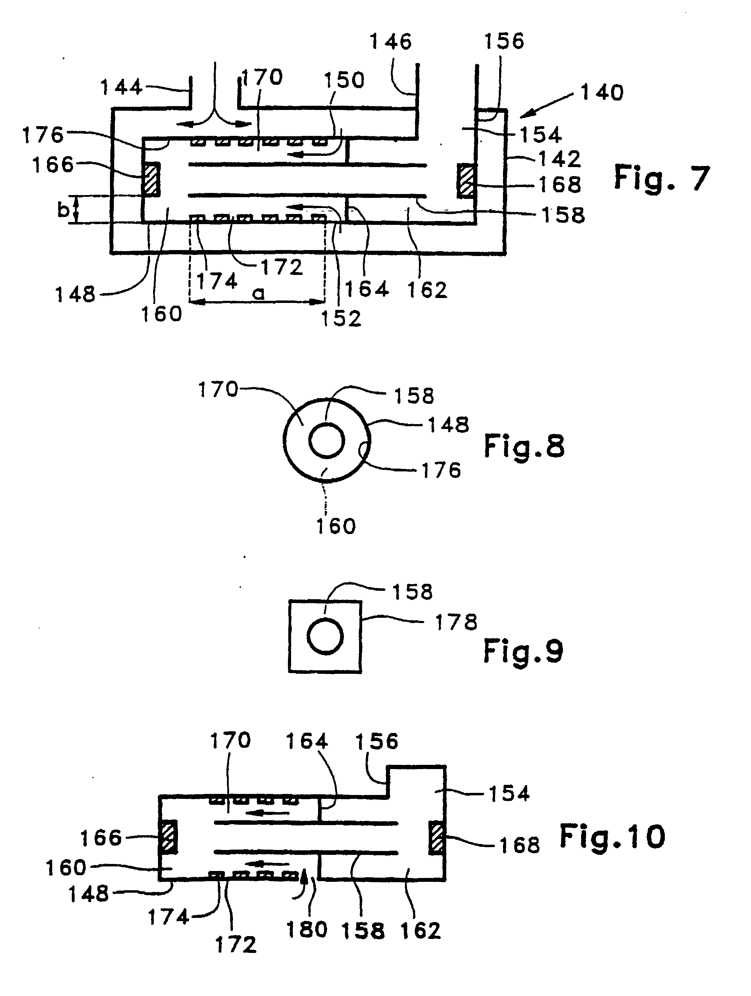

Ainsi que représenté sur la figure 7, un compteur de fluide 140, par exemple de gaz, comprend une enceinte 142 munie de deux orifices 144, 146 respectivement pour l'amenée et pour l'évacuation du gaz.

Un bloc de mesure 148 est disposé à l'intérieur de l'enceinte et est pourvu de plusieurs ouvertures 150, 152 pour l'entrée du gaz dans ledit bloc et d'une ouverture 154 prolongée par un raccord 156 en forme de cheminée pour la sortie du gaz dudit bloc.

Le raccord 156 est fixé à l'orifice d'évacuation 146.

Dans le bloc de mesure, le trajet de mesure ultrasonore est réalisé sous la forme d'un conduit de mesure qui est par exemple un tube 158.

Toutefois, ce conduit de mesure pourrait par exemple être en forme d'ellipsoïde comme décrit dans le document EP 0 538 930 ou pourrait avoir une section de passage transversale rectangulaire comme décrit dans le document EP 0 580 099.

Le bloc de mesure comprend deux logements 160, 162 séparés par une paroi 164 qui est traversée par le tube 158.

Deux transducteurs ultrasonores 166, 168 sont respectivement disposés en face des extrémités opposées du tube 158 dans les chambres 160, 162.

Comme représenté sur les figures 7 et 8 le bloc de mesure a une forme externe sensiblement cylindrique et la paroi cylindrique de la chambre 160 ménage avec la paroi externe du tube 158 un passage annulaire 170 entourant ledit tube.

Le gaz qui entre dans l'enceinte 142 par l'orifice 144 se répartit autour du bloc de mesure 148 et pénètre dans celui-ci par les ouvertures 150, 152 puis circule dans le passage annulaire 170 avant d'atteindre le trajet de mesure entre les deux transducteurs. Entre les ouvertures 150, 152 et le trajet de mesure, dans le passage annulaire 170, une pluralité de rainures 172 alternées consécutivement avec des saillies 174 sont aménagées sur la surface cylindrique 176 de la paroi de la chambre 160. Ces rainures/saillies sont circulaires et sont disposées transversalement par rapport à la direction de propagation du gaz dans le passage annulaire 170, de préférence perpendiculairement à cette direction de propagation.

De façon analogue à ce qui a été décrit en référence aux figures 1 à 5 cette pluralité de rainures/saillies a pour fonction d'atténuer les ondes ultrasonores parasites véhiculées par le gaz avant qu'elles ne pénètrent dans le tube de mesure 158.

Pour que l'atténuation soit efficace il faut que la dimension transversale b du passage soit très inférieure à la longueur d'onde λ des ondes parasites et que la dimension longitudinale de chaque portion de passage formée d'un couple de rainures/saillies soit de l'ordre de λ/2.

La dimension longitudinale a du passage annulaire 170 ne doit pas être trop courte pour avoir une certaine efficacité.

Les autres caractéristiques et avantages décrits en relation avec les figures 1 à 5 restent valables.

Il convient de remarquer qu'il est avantageux de disposer le passage dans lequel les ondes parasites sont atténuées suivant au moins une partie de la longueur du conduit de mesure pour avoir un bloc de mesure d'encombrement réduit.

Par contre, lorsque l'encombrement du bloc de mesure n'est pas une contrainte, il est bien sûr possible de disposer le passage perpendiculairement ou incliné par rapport à la direction longitudinale du conduit de mesure.

Le bloc de mesure 148 peut également avoir une section transversale de forme carrée ou rectangulaire (Fig.9) dont la surface interne serait pourvue des rainures et des saillies.

La figure 10 illustre une deuxième variante de réalisation du schéma de la figure 7 dans laquelle seul le bloc de mesure est représenté et où tous les éléments déjà décrits sur la figure 7 ne seront pas repris et conservent les mêmes références.

Sur cette figure, les ouvertures 150, 152 de la figure 7 ont été remplacées par une seule ouverture 180 située sous le bloc de mesure mais cette ouverture pourrait également se situer au dessus dudit bloc dans le cadre d'une autre variante.

Ainsi, l'écoulement de gaz pénètre dans la chambre 160 par cette ouverture et se répartit autour du conduit de mesure.

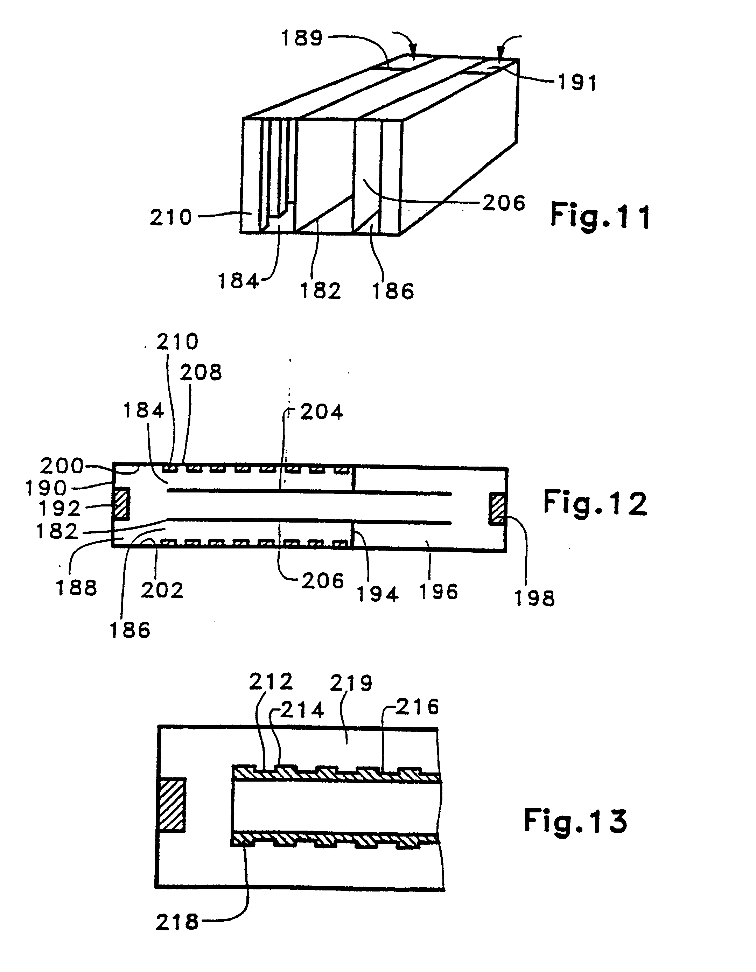

Les figures 11 et 12 illustrent une troisième variante de réalisation du bloc de mesure dans laquelle le conduit de mesure 182 a une section transversale de forme rectangulaire et deux passages 184, 186 sont aménagés sur au moins une partie de la dimension longitudinale du conduit de mesure de part et d'autre de celui-ci dans le bloc de mesure 190. Sur la figure 11 la partie du logement contenant le transducteur ultrasonore n'a pas été représentée. L'écoulement pénètre dans ces passages par les deux ouvertures supérieures 189, 191 comme indiqué par les flèches (Fig.11). Un transducteur 192 est placé en vis-à-vis d'une extrémité du conduit de mesure 182 dans le bloc de mesure 190. Le conduit de mesure traverse une cloison 194 qui sépare le bloc de mesure en deux parties. Un second transducteur ultrasonore 198 est placé en vis-à-vis de l'extrémité opposée du conduit de mesure.

Les surfaces respectives 200, 202 des passages latéraux 184, 186 qui font face aux surfaces 204, 206 des parois latérales du conduit de mesure 182 sont pourvues d'une alternance de rainures 208/saillies 210 qui présentent les mêmes caractéristiques que celle décrites en référence aux figures 1 à 10 mis à part leur forme qui dépend de celle des passages latéraux.

Les rainures/saillies sont disposées de préférence perpendiculairement par rapport à la direction longitudinale de l'écoulement dans les passages.

La figure 13 illustre une quatrième variante de réalisation dans laquelle des rainures 212/saillies 214 sont aménagées sur la (ou les) surface(s) 216 du conduit de mesure 218 selon qu'un seul passage 219 est prévu autour du conduit de manière analogue aux figures 7 à 10 ou que deux ou plusieurs passages sont prévus de part et d'autre dudit conduit (Figs.11, 12). Cette variante est avantageuse dans la mesure où il est plus facile de réaliser les saillies/rainures directement sur le conduit de mesure qui est fabriqué séparément du reste du bloc de mesure et introduit ensuite dans le bloc de mesure que sur les parois de la chambre dans laquelle est partiellement disposé le conduit.

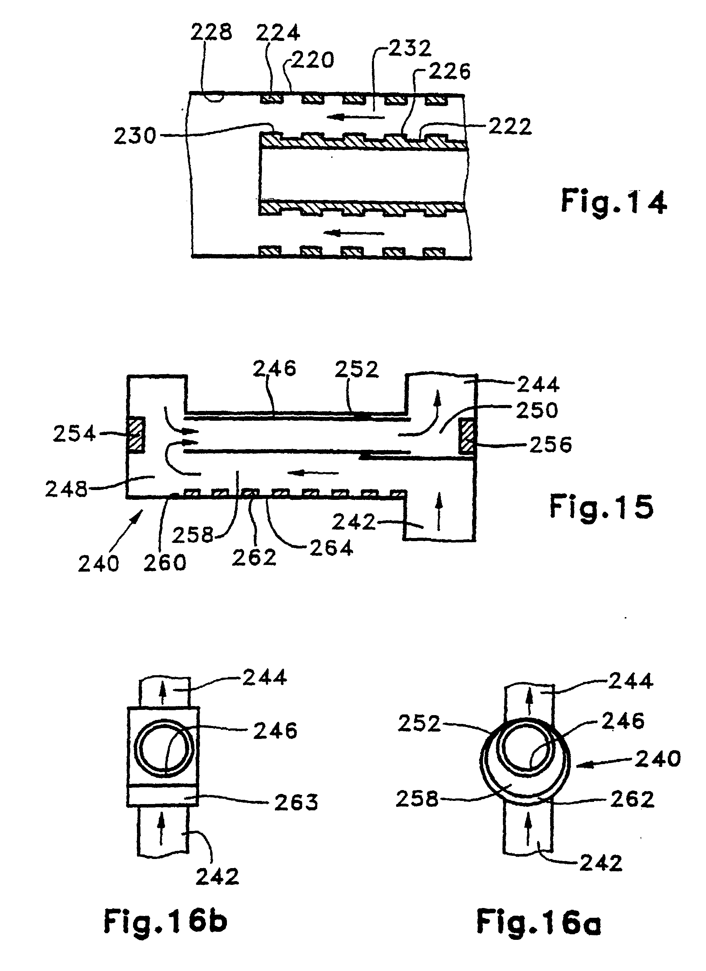

La figure 14 illustre une cinquième variante de réalisation dans laquelle des rainures 220, 222/saillies 224, 226 sont aménagées simultanément sur les deux surfaces 228, 230 en regard du(ou des) passage(s) 232. Cette variante-peut s'appliquer à l'une quelconque des configurations représentées aux figures 7 à 13.

Le bloc de mesure 240 représenté sur la figure 15 illustre une autre variante de réalisation dans laquelle deux ouvertures 242, 244 respectivement pour l'entrée et la sortie du fluide dans ledit bloc de mesure sont sensiblement alignées entre elles.

Ces ouvertures peuvent être directement reliées respectivement à des orifices d'amenée et d'évacuation du fluide alignés entre eux ou bien le bloc de mesure ainsi représenté sur la figure 15 peut aussi être intégré dans une enceinte du type de celle représentée à la figure 7. Le bloc de mesure 240 comprend un conduit de mesure 246 et deux logements 248, 250 séparés par une cloison 252 qui est traversée par ledit conduit.

Deux transducteurs ultrasonores 254, 256 sont respectivement placés en vis-à-vis des deux extrémités opposées du conduit de mesure 246 dans les logements 248, 250.

Un passage 258 est prévu d'un seul côté du conduit de mesure pour, d'une part, véhiculer le fluide depuis l'ouverture 242 jusqu'à l'extrémité du conduit située en face du transducteur 254 et, d'autre part, atténuer les ondes ultrasonores parasites propagées dans le fluide.

A cet effet, le passage 258 comporte sur une de ses faces 260 disposée en regard de la surface extérieure du conduit de mesure 246 des saillies 262 alternées avec des rainures 264 comportant les mêmes caractéristiques que celles décrites en référence aux figures précédentes.

Si la partie du logement 248 située le long du conduit de mesure a une section transversale circulaire les rainures/saillies 263 ont par exemple une forme semi-circulaire (Fig.16a).

Si, par contre, la partie du logement située le long du conduit de mesure a une section transversale de forme carrée ou rectangulaire les rainures/saillies ont par exemple une forme droite (Fig.16b).

La configuration représentée aux figures 15 et 16a, b présente l'avantage, par rapport aux agencements réalisés sur les figures 7 à 13, d'offrir au fluide une plus grande longueur sur laquelle il est au contact des rainures/saillies ce qui a pour effet d'augmenter l'efficacité de l'atténuation des ondes ultrasonores parasites.

Pour augmenter davantage cette efficacité, il est également possible d'aménager des rainures/saillies sur la surface du conduit de mesure 246 située en regard de la surface 260.

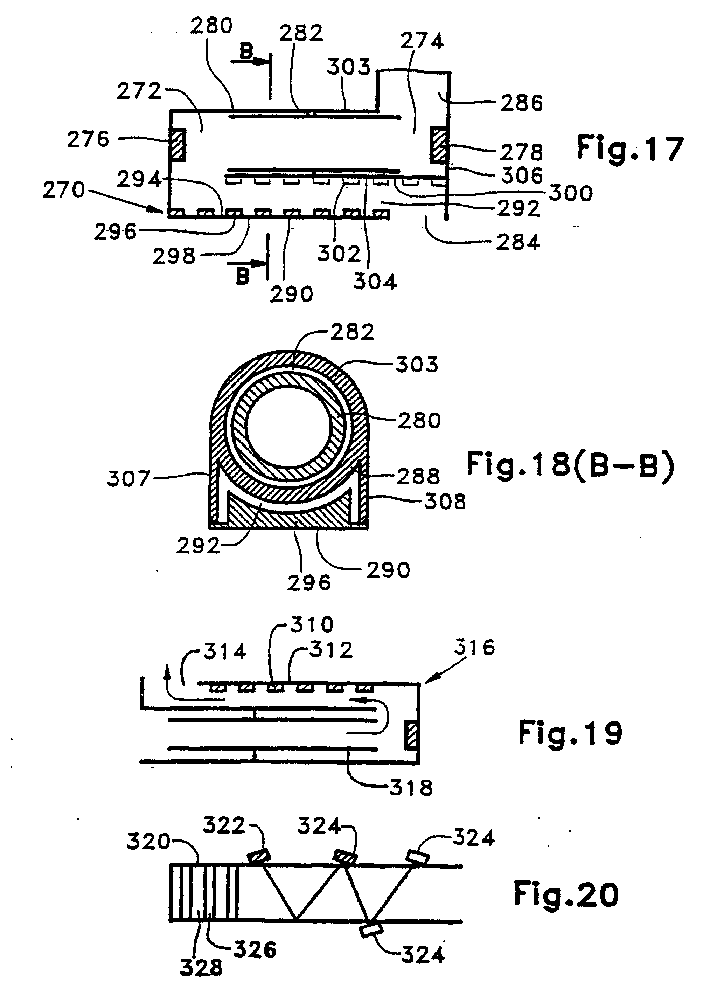

Selon encore une autre variante de réalisation représentée aux figures 17 et 18, le bloc de mesure 270 comprend toujours deux logements 272, 274 dans lesquels sont placés deux transducteurs ultrasonores 276, 278 en face des extrémités opposées d'un conduit de mesure 280 qui traverse une cloison 282 séparant lesdits logements.

Deux ouvertures 284, 286 respectivement pour l'entrée et la sortie du fluide sont sensiblement alignées l'une par rapport à l'autre.

Le bloc de mesure 270 comporte en outre une paroi séparatrice 288 disposée le long du conduit de mesure 280 et qui forme avec une autre paroi 290 située en regard le passage 292 qu'emprunte le fluide pour atteindre le conduit de mesure.

Dans ce passage au moins l'une 294 des surfaces des deux parois en regard 288, 290 est pourvue de saillies 296/nervures 298 en alternance qui peuvent être disposées sur toute la longueur de la paroi.

Dans un souci d'une plus grande efficacité, la surface 300 de la paroi 288 peut également être pourvue de saillies 302/nervures 304 en alternance représentées en pointillés sur la figure 17.

La figure 18 est une vue agrandie en section transversale (selon B-B) du bloc de mesure représenté à la figure 17 et sur laquelle l'épaisseur des parois a été représentée.

Ainsi, le bloc de mesure a une forme générale et dont la paroi 303 est circulaire vue en section transversale.

Le bloc de mesure est fermé aux deux extrémités longitudinales par deux parois d'extrémité 305, 306 (Fig 17). Au droit du passage 292 la paroi 303 est confondue avec la paroi séparatrice 288.

Deux parois longitudinales latérales 307 et 308, parallèles entre elles, tangentent la surface extérieure de la paroi 303 et s'étendent vers le bas en direction de la paroi 290 de manière à former les côtés du passage 292.

Avantageusement, la paroi 290 est une pièce rapportée sur le bloc de mesure 270 qui forme un capot.

Ainsi, les saillies/nervures peuvent être réalisées aisément par moulage sur l'une et/ou l'autre les deux parois 288,290 avant de fixer la paroi 290 sur le bloc de mesure.

Ceci présente encore un autre avantage : lorsque le bloc de mesure doit être adapté à des gammes de débit de fluide différentes, il suffit de changer la paroi 290 et de la remplacer par une paroi de même dimension longitudinale mais dont les dimensions transversales sont modifiées afin de changer la section de passage transversale offerte au fluide, tout en conservant les conditions relatives aux dimensions transversales de la section de passage par rapport à la longueur d'onde λ.

La figure 18 montre la forme des saillies 296 qui est adaptée à la forme du passage et de la paroi séparatrice 288. Sur cette figure les saillies 302 n'ont pas été représentées par souci de clarté.

Au droit des saillies la section de passage offerte au fluide a une forme de M.

Cette configuration permet d'avoir une section de passage qui n'induise pas trop de pertes de charge tout en atténuant efficacement les ondes ultrasonores parasites.

Pour élargir la gamme de débits d'un compteur dont lé bloc de mesure comporte une telle configuration il suffit de changer la paroi 290 en forme de capot et de la remplacer par une paroi telle que les branches du M en contact avec les parois latérales 307, 308 soient plus hautes que celles représentées sur la figure 18 afin d'augmenter la section de passage offerte au fluide.

La figure 19 illustre une variante de réalisation représentée partiellement dans laquelle les moyens 310, 312 d'atténuation des ondes ultrasonores parasites analogues à ceux décrits en référence aux figures précédentes sont disposés entre l'ouverture de sortie 314 du bloc de mesure 316 et le conduit de mesure 318 afin d'empêcher la propagation dans le trajet de mesure ultrasonore d'ondes parasites provenant de l'aval du compteur de fluide.

Dans certaines configurations de compteurs de fluide, le conduit de mesure 320 ne constitue pas tout le trajet de mesure ultrasonore mais seulement une partie. Le conduit de mesure a par exemple une section transversale de forme circulaire voire rectangulaire comme décrit dans le document WO 9109280.

Les transducteurs ultrasonores, au moins au nombre de deux 322, 324, sont montés sur un même côté du conduit de mesure 320 comme représenté sur la figure 20. Ils peuvent également être montés sur des côtés diamétralement opposés et le trajet de mesure ultrasonore peut ainsi revêtir différentes formes (V, W...). Le transducteur 324 est placé en différents endroits (en pointillés) pour indiquer l'allure possible des trajets de mesure. Avec ce type de configurations, il est possible de prévoir en amont et/ou en aval du trajet de mesure, selon l'emplacement de la source de bruit, des saillies 326/rainures 328 en alternance à l'intérieur du conduit afin d'atténuer les ondes ultrasonores parasites venant de l'extérieur.

Afin de pouvoir aménager les saillies/nervures dans le conduit celui-ci est par exemple réalisé en deux parties.

Si la place disponible pour le conduit de mesure n'est pas suffisante il est préférable de disposer les saillies/rainures en dehors de celui-ci suivant par exemple l'une des configurations représentées aux figures 7 à 19.

Lorsqu'il est nécessaire d'atténuer très fortement le bruit acoustique extérieur véhiculé par le fluide, il peut être avantageux de combiner les caractéristiques représentées sur les figures 1 à 6 sur lesquelles le(ou les) passage(s) est(sont) aménagé(s) entre l'enceinte du compteur et le bloc de mesure, aux caractéristiques représentées sur les figures 7 à 20 sur lesquelles le(ou les) passage(s) est(sont) aménagé(s) dans le bloc de mesure lui-même.

Pour des niveaux de bruit plus faibles, on peut se contenter des configurations représentées sur les figures 1 à 6 ou bien de celles des figures 7 à 20.

Le fait de prévoir que les moyens d'atténuation des ondes ultrasonores parasites sont disposés dans le bloc de mesure et non pas entre le bloc de mesure et l'enceinte dans laquelle il est placé est avantageux.

En effet, les dimensions de l'enceinte renfermant le bloc de mesure ainsi que l'emplacement des orifices d'amenée et d'évacuation du fluide varient selon les exigences nationales.

Ceci impose de modifier en conséquence la taille des saillies/nervures pour conserver une même efficacité d'atténuation lorsque celles-ci sont disposées entre le bloc de mesure et l'enceinte, alors qu'il n'est pas nécessaire de faire de telles modifications lorsque les saillies/nervures sont disposées dans un(ou plusieurs) passage(s) aménagé(s) à l'intérieur du bloc de mesure.

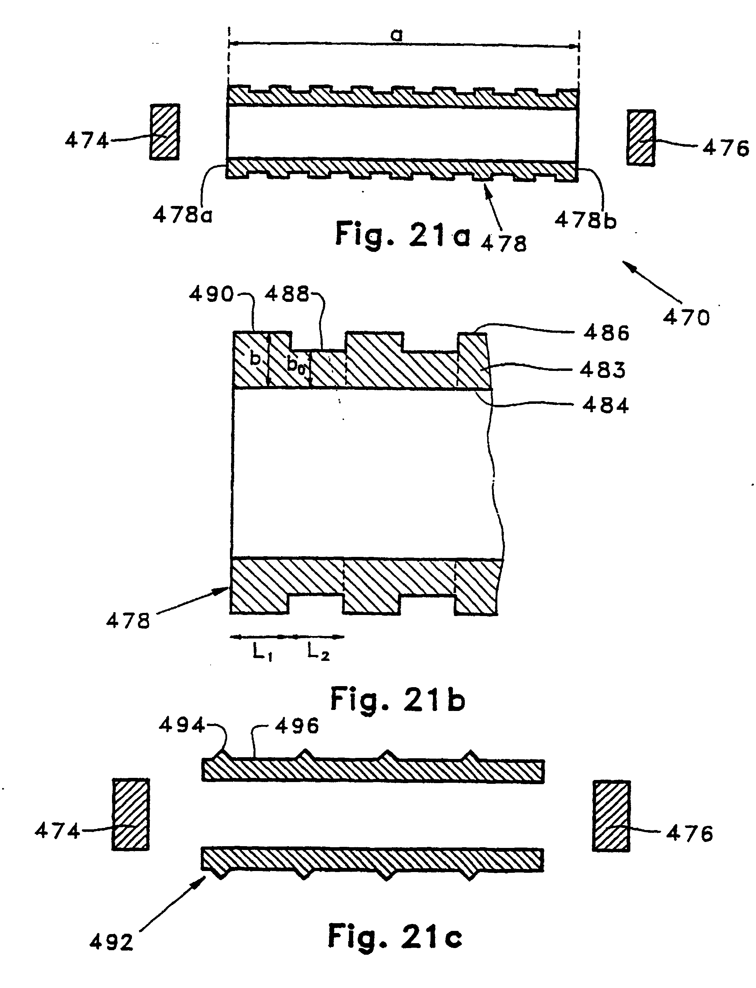

Un aspect particulièrement intéressant de l'invention va maintenant être illustré et décrit en référence aux figures 21a et 21b.

Dans un bloc de mesure ultrasonore partiellement représenté, deux transducteurs ultrasonores sont disposés aux deux extrémités opposées d'un conduit de mesure 478 qui constitue le trajet de mesure ultrasonore.

Le fluide qui pénètre dans le bloc de mesure s'engouffre dans le conduit de mesure 478 par l'extrémité 478a de celui-ci, traverse ledit conduit, sort de celui-ci par l'extrémité 478b, et s'échappe du bloc de mesure.

Normalement, lorsque les transducteurs ultrasonores fonctionnent, des ondes ultrasonores sont émises à une fréquence déterminée par l'un des transducteurs, se propagent à l'intérieur du conduit de mesure 478 et atteignent l'autre transducteur opposé, par exemple 476 et le temps de propagation de ces ondes est pris en compte pour déterminer le débit du fluide.

Néanmoins, dans certains cas de figure, il existe un couplage acoustique entre deux milieux de propagation disposés en contact, à savoir, le milieu fluide situé à l'intérieur du conduit de mesure 478 et le matériau constitutif de la paroi du conduit de mesure 478.

Ceci est par exemple le cas, lorsque le milieu fluide est l'eau et que le conduit de mesure est métallique, comme par exemple de l'acier. Le cas peut également se rencontrer lorsque le milieu fluide est un gaz et que le conduit de mesure est en plastique.

Dans de tels cas, les ondes ultrasonores parasites qui se propagent à l'intérieur du conduit de mesure 478 en provenance du transducteur ultrasonore 474 pénètrent partiellement dans la paroi du conduit de mesure 478, se propagent dans cette paroi parallèlement au trajet de mesure ultrasonore à l'intérieur du conduit et parviennent au transducteur ultrasonore opposé 476, avant ou en même temps que les ondes ultrasonores qui se propagent à l'intérieur dudit conduit de mesure. On observe alors une superposition des ondes ultrasonores qui est vue par le transducteur 476, ce qui rend impraticable toute mesure précise du débit de fluide à l'intérieur du conduit de mesure. Dans cet exemple, le conduit de mesure est un tube mais il pourrait être également être un conduit de mesure dont la section transversale est de forme rectangulaire telle que par exemple décrit dans la demande de brevet européen n°0 580 099.

Le conduit de mesure 478 représenté aux figures 21a et 21b comprend une paroi périphérique 483 qui a une dimension longitudinale a et forme un passage dans lequel les ondes ultrasonores parasites se propagent suivant une direction principale confondue avec la direction longitudinale du tube. Ce passage possède une dimension transversale b perpendiculaire à la dimension longitudinale a et qui est très inférieure à la longueur d'onde λ des ondes parasites dans le milieu considéré à savoir, l'acier. Par exemple, a = 100mm, b₀ =2mm, b =3mm et λ = 6mm.

Le passage est délimité par deux surfaces longitudinales en regard concentriques 484 et 486, la surface extérieure du conduit de mesure étant la surface 486. Sur la surface extérieure 486 du conduit de mesure, des rainures 488 parallèles entre elles sont usinées, ménageant ainsi entre deux rainures consécutives une saillie 490.

Chaque couple formé d'une rainure 488 consécutive à une saillie 490, délimite dans la paroi 483 une portion de passage dans laquelle les ondes ultrasonores parasites sont soumises à une réduction de section de passage au droit de ladite rainure qui forme une saillie dans ladite paroi.

Ces rainures et ces saillies sont agencées sur toute la dimension longitudinale a du conduit de mesure et possèdent chacune une dimension longitudinale L1 pour la saillie 490 et L2 pour la rainure 488.

La dimension longitudinale de chaque portion de passage, L1 + L2, est sensiblement égale à λ/2. Par exemple, L₁ = 1,5mm, L₂ = 1,5mm

Les conditions énoncées précédemment en relation avec les moyens d'atténuation représentés sur les figures 1 et 3 restent valables pour ce mode de configuration. Il convient de remarquer que la dimension transversale réduite bo ne doit pas être inférieure à la dimension b/2 pour que le tube conserve sa rigidité. Dans cette configuration, les rainures ont une forme annulaire de même que les saillies.

Sur la figure 21c, seuls les transducteurs ultrasonores 474 et 476 et le conduit de mesure 492 ont été représentés.

Dans la variante représentée à la figure 21c, les rainures 496 ont une dimension longitudinale beaucoup plus grande que les saillies 494 qui ont une forme de bourrelet. Chaque rainure a une forme trapézoïdale dont le sommet du trapèze se situe sur la surface extérieure du tube 492.

Il convient de remarquer que les formes représentées sur les figures 4b et 4c peuvent également être réalisées sur la surface extérieure du conduit de mesure 492.

Le conduit de mesure ainsi configuré atténue de manière très efficace les ondes ultrasonores parasites.

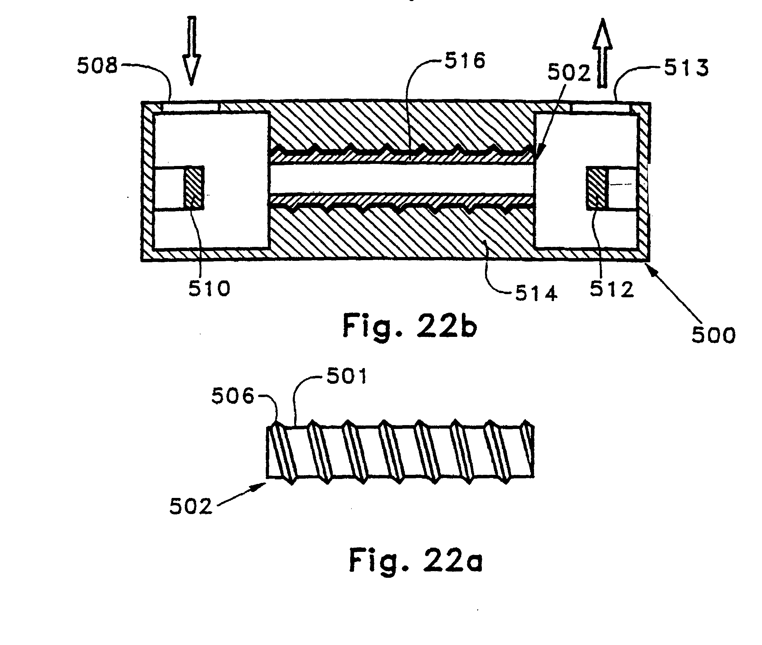

Les figures 22a et 22b représentent une autre variante de réalisation des moyens d'atténuation selon l'invention.

Sur la figure 22a, un conduit de mesure de forme circulaire (tube) 502 est usiné de manière à faire apparaître sur sa surface extérieure une rainure 504 de forme hélicoïdale et un filet 506. Ce tube peut être disposé à l'intérieur d'un bloc de mesure tel que celui représenté sur la figure 21 a ou encore celui représenté sur la figure 22b.

Sur la figure 22b, le bloc de mesure 500 comprend une ouverture 508 pour l'entrée du fluide dans une première chambre à l'intérieur de laquelle se trouve un transducteur ultrasonore 510, disposé en face d'une extrémité du conduit de mesure 502, l'autre extrémité du conduit de mesure 502 qui lui est opposé est disposé en regard d'un transducteur 512, situé à l'intérieur d'une deuxième chambre, qui communique avec une sortie 513 pour l'évacuation du fluide. Sur cette figure, le bloc de mesure 500 comprend une partie centrale pleine 514 dans laquelle est ménagé un logement cylindrique 516. Avantageusement, le conduit de mesure cylindrique représenté à la figure 22a est inséré à l'intérieur du logement 516 par vissage grâce à sa surface extérieure filetée.

En plus de cette caractéristique avantageuse, le conduit de mesure 502 ainsi configuré possède les propriétés énoncées plus haut en relation avec les autres figures pour filtrer de manière efficace les ondes ultrasonores parasites qui se propagent dans la paroi dudit conduit 502.

## Revendications

1. Compteur (10) de fluide à ultrasons comprenant des transducteurs ultrasonores (26,28;474,476;510,512) placés au contact du fluide définissant entre eux un trajet de mesure ultrasonore et émettant et recevant des ondes ultrasonores dans le fluide le long dudit trajet de mesure suivant au moins une fréquence ultrasonore, des moyens d'atténuation des ondes ultrasonores dites parasites, de longueur d'onde λ qui perturbent la réception par l'un des transducteurs des ondes ultrasonores émises par l'autre transducteur, **caractérisé en ce que** les moyens d'atténuation sont constitués par au moins un passage (36,38,40;83) dans lequel s'écoule le fluide et dans lequel lesdites ondes parasites se propagent suivant une direction principale qui correspond à une dimension dite longitudinale a dudit passage, ledit passage ayant une dimension transversale b perpendiculaire à la dimension a et qui est très inférieure à la longueur d'onde λ des ondes parasites dans le milieu de propagation, ledit passage comprenant une pluralité de portions de passage consécutives (46,48;50,52;54,56;58,60) ayant chacune une partie (46;52;56;60) qui présente une réduction de la section de passage transversale suivant la dimension b du passage, la dimension longitudinale de chaque portion de passage étant sensiblement égale à λ/2.

2. Compteur de fluide selon la revendication 1, dans lequel le passage (36,38,40;83) est délimité par au moins deux surfaces longitudinales (42,44;84,86) en regard écartées suivant la dimension b, et sur au moins l'une desquelles sont pratiquées transversalement une pluralité de rainures (48;50;54;58;88;96) consécutives parallèles entre elles et alternées avec des saillies, un couple de rainure/saillie étant disposées au droit de chaque portion de passage.

3. Compteur de fluide selon la revendication 2, dans lequel chaque rainure (50) a un profil en forme de V.

4. Compteur de fluide selon la revendication 2, dans lequel chaque rainure (48) a un profil en forme de U formant ainsi sur ladite surface des créneaux.

5. Compteur de fluide selon l'une des revendications 1 à 4, dans lequel la longueur d'onde des ondes parasites varie à l'intérieur d'une gamme déterminée, et la dimension longitudinale des portions de passage varie de maniére croissante ou décroissante pour couvrir la gamme de longueurs d'onde déterminée.

6. Compteur de fluide selon l'une des revendications 1 à 5, comprenant une enceinte (12;142) munie d'un orifice (14;144) d'amenée du fluide et d'un orifice (16;134;146) d'évacuation du fluide, un bloc de mesure (18;126;148;190;240; 270;316;320) équipé des transducteurs ultrasonores (26,28;166,168) et pourvu d'au moins deux ouvertures (20,34;150,152,154;189,191;242;244;284,286;314) permettant respectivement au fluide d'arriver jusqu'au trajet de mesure ultrasonore (30;158;182) et de s'en éloigner, le(s) passage(s) dans le(s)quel(s) les ondes ultrasonores parasites se propagent est(sont) aménagé(s) entre au moins l'un des orifices d'amenée et d'évacuation du fluide et le trajet de mesure.

7. Compteur de fluide selon la revendication 6, dans lequel ledit bloc de mesure (18;126) est agencé à l'intérieur de ladite enceinte (12;120) de manière à ménager entre ces derniers le (ou les) passage(s) (36,38,40;121,122) dans le(s)quel(s) les ondes ultrasonores parasites se propagent et que le fluide emprunte avant d'entrer dans le bloc de mesure ou après en être sorti.

8. Compteur de fluide selon les revendications 2 et 7, dans lequel la surface (44;132) sur laquelle sont pratiquées les rainures est celle du bloc de mesure.

9. Compteur de fluide selon la revendication 6 ou 7, dans lequel le bloc de mesure (148;190;240;270) comprend le(s) passage(s) (170;184,186;219;232;258;292) qui permet(tent) d'atténuer les ondes ultrasonores parasites et qui est (sont) aménagé(s) entre au moins l'une desdites ouvertures (150,152;180;189,191;242,244; 284, 286;314) et ledit trajet de mesure, le(s)dit(s) passage(s) servant également à véhiculer le fluide.

10. Compteur de fluide selon la revendication 9, dans lequel le trajet de mesure est réalisé à l'intérieur d'un conduit de mesure (158;182;218;246;280;318;320).

11. Compteur de fluide selon la revendication 10, dans lequel le conduit de mesure (158;182;246;280) est au moins partiellement disposé dans un logement (160;248;272) du bloc de mesure.

12. Compteur de fluide selon la revendication 11, dans lequel le(s) passage(s) (170;184,186;258) est(sont) aménagé(s) entre les parois (176;200,202;260) du logement et le conduit de mesure (158;182;246).

13. Compteur de fluide selon la revendication 12, dans lequel le(s) passage(s) (170;219) est(sont) aménagé(s) autour du conduit de mesure (158;218).

14. Compteur de fluide selon l'une des revendications 10 à 12, dans lequel le(s) passage(s) (258;292) est(sont) aménagé(s) d'un seul côté du conduit de mesure (246;280).

15. Compteur de fluide selon l'une des revendications 10 à 12, dans lequel les passages (184;186) sont aménagés de part et d'autre du conduit de mesure (182).

16. Compteur de fluide selon l'une des revendications 9 à 15, dans lequel le(s) passage(s) est (sont) aménagé(s) le long d'au moins une partie du trajet de mesure.

17. Compteur de fluide selon la revendication 2 et l'une des revendications 10 à 16, dans lequel des couples de rainures/saillies (212,214;222,226) sont pratiquées sur la surface extérieure du conduit de mesure.

18. Compteur de fluide selon la revendication 10, dans lequel le(ou les) passage(s) est(sont) disposé(s) à l'intérieur du conduit de mesure (320).

19. Compteur de fluide selon la revendication 14, dans lequel le bloc de mesure comporte du côté où est(sont) aménagé(s) le(s) passage(s) une paroi dite séparatrice (288) qui sépare le conduit de mesure (280) du (des) passage(s) (292).

20. Compteur de fluide selon la revendication 19, dans lequel le bloc de mesure comporte une autre paroi (290) qui est disposée en regard de la paroi séparatrice (288) de manière à ce que les surfaces en regard de ces deux parois délimitent le(s) passage(s) (292).

21. Compteur de fluide selon la revendication 20, dans lequel l'autre paroi (290) est une pièce rapportée sur le bloc de mesure.

22. Compteur de fluide selon l'une des revendications 1 à 5, comprenant un conduit de mesure (478;492;502) qui constitue au moins partiellement le trajet de mesure ultrasonore et qui possède au moins une paroi périphérique (483) qui correspond au passage dans lequel les ondes ultrasonores parasites se propagent.

23. Compteur de fluide selon les revendications 2 et 22, dans lequel la surface sur laquelle sont pratiquées les rainures (488) est la surface extérieure (486) du conduit de mesure (478), la réduction de section de passage de chaque portion de passage étant localisée au droit de chaque rainure dans ladite paroi.

24. Compteur de fluide selon la revendication 22 ou 23, dans lequel le conduit de mesure est un tube (478;492;502).

25. Compteur de fluide selon la revendication 24, dans lequel les rainures (488,496) ont une forme annulaire et sont disposées le long du tube.

26. Compteur de fluide selon la revendication 24, dans lequel une rainure (504) de forme hélicoïdale est pratiquée sur la surface extérieure du tube de mesure (502).

## Patentansprüche

1. Ultraschall-Flüssigkeitszähler (10) mit Ultraschallwandlern (26, 28, 474, 476, 510, 512), die mit Flüssigkeit in Kontakt kommen. Sie bestimmen einen Ultraschall-Messweg und senden und empfangen Ultraschallwellen in der Flüssigkeit entlang des besagten Messweges gemäß mindestens einer Ultraschallfrequenz. Außerdem umfasst der Ultraschall-Flüssigkeitszähler Elemente zur Dämpfung der sogenannten unerwünschten Ultraschallwellen, mit einer Wellenlänge λ, die den Empfang von Ultraschallwellen stören, die von einem Wandler gesendet und von einem anderen empfangen werden. Die Elemente zur Dämpfung bestehen aus mindestens einem Durchgang (36, 38, 40, 83) in dem die Flüssigkeit strömt und in dem sich die besagten unerwünschten Wellen gemäß einer Hauptrichtung, die einer sogenannten Längsabmessung "a" des besagten Durchgangs entspricht, ausbreiten. Der besagte Durchgang hat eine senkrecht zur Abmessung "a" liegende transversale Abmessung "b", die sehr viel kleiner ist als die Wellenlänge λ der unerwünschten Wellen in der Ausbreitungsumgebung. Der besagte Durchgang umfasst eine Vielzahl von benachbarten Durchgangsteilen (46, 48, 50, 52, 54, 56, 58, 60), die jeweils einen Teil haben (46, 52, 56, 60), der eine Reduzierung des transversalen Durchgangsquerschnitts gemäß der Abmessung "b" des Durchgangs aufweist. Die Längsabmessung jedes Durchgangsteils entspricht etwa dem Wert λ/2.

2. Flüssigkeitszähler gemäß dem Patentanspruch 1, bei dem der Durchgang (36, 38, 40, 83) aus der Entfernung betrachtet durch mindestens zwei Längsflächen (42, 44, 84, 86) gemäß der Abmessung "b" abgegrenzt wird. Auf mindestens einer der Längsflächen befindet sich eine Vielzahl quer aufgebrachter benachbarter Rillen (48, 50, 54, 58, 88, 96), die parallel zueinander liegen und sich regelmäßig mit Vorsprüngen abwechseln. Ein Rillen-/Vorsprungpaar ist auf der rechten Seite jedes Durchgangsteils angeordnet.

3. Flüssigkeitszähler gemäß dem Patentanspruch 2, bei dem jede Rille (50) ein V-Profil besitzt.

4. Flüssigkeitszähler gemäß dem Patentanspruch 2, bei dem jede Rille (48) ein U-Profil besitzt und auf diese Weise auf der besagten Fläche Schlitze bildet.

5. Flüssigkeitszähler gemäß einem der Patentansprüche 1 bis 4, bei dem die Wellenlänge der unerwünschten Wellen in einem festgelegten Bereich variiert und die Längsabmessung der Durchgangsteile auf zunehmende oder abnehmende Weise variiert, um den Bereich der festgelegten Wellenlängen einzunehmen.

6. Flüssigkeitszähler gemäß einem der Patentansprüche 1 bis 5, der ein Schutzgehäuse (12, 142) umfasst, die mit einem Loch (14, 144) für die Flüssigkeitszufuhr versehen ist und mit einem Loch (16, 134, 146) für den Flüssigkeitsauslass. Außerdem umfasst der Flüssigkeitszähler ein Messgerät (18, 126, 148, 190, 240, 270, 316, 320), das mit Ultraschallwandlern (26, 28, 166, 168) ausgerüstet ist und mit mindestens zwei Öffnungen (20, 34, 150, 152, 154, 189, 191, 242, 244, 284, 286, 314) versehen ist, die ermöglichen, dass die Flüssigkeit bis zu dem Ultraschall-Messweg (30, 158, 182) gelangt und sich von ihm entfernt. Der/die Durchgang/Durchgänge, in dem/denen sich die unerwünschten Ultraschallwellen ausbreiten, ist/sind zwischen mindestens einem der Flüssigkeitszufuhr- und Auslasslöcher und dem Messweg angeordnet.

7. Flüssigkeitszähler gemäß dem Patentanspruch 6, bei dem das genannte Messgerät (18, 126) in dem besagten Schutzgehäuse (12, 120) untergebracht ist und zwar so, dass zwischen ihnen der Durchgang /oder die Durchgänge (36, 38, 40, 121, 122) ausgespart wird/werden, in dem/denen sich die unerwünschten Ultraschallwellen ausbreiten und durch den/die die Flüssigkeit läuft, bevor sie in das Messgerät eintritt oder nachdem sie aus letzterem austritt.

8. Flüssigkeitszähler gemäß den Patentansprüchen 2 und 7, bei dem die Fläche (44, 132) auf der sich die Rillen befinden, der Fläche des Messgerätes entspricht.

9. Flüssigkeitszähler gemäß dem Patentanspruch 6 oder 7, bei dem das Messgerät (148, 190, 240, 270) den/die Durchgang/Durchgänge (170, 184, 186, 219, 232, 258, 292) umfasst, der/die eine Dämpfung der unerwünschten Ultraschallwellen ermöglicht/ermöglichen und der/die zwischen mindestens einer der genannten Öffnungen (150, 152, 180, 189, 191, 242, 244, 284, 286, 314) und dem genannten Messweg angeordnet ist/sind. Der/die Durchgang/Durchgänge dienen außerdem zum Flüssigkeitstransport.

10. Flüssigkeitszähler gemäß dem Patentanspruch 9, bei dem der Messweg in einer Messleitung (158, 182, 218, 246, 280, 318, 320) angelegt wurde.

11. Flüssigkeitszähler gemäß dem Patentanspruch 10, bei dem die Messleitung (158, 182, 246, 280) zumindest teilweise in einer Aufnahme (160, 248, 272) des Messgerätes angeordnet ist.

12. Flüssigkeitszähler gemäß dem Patentanspruch 11, bei dem der/die Durchgang/Durchgänge (170, 184, 186, 258) zwischen den Wänden (176, 200, 202, 260) der Aufnahme und der Messleitung (158, 182, 246) angeordnet ist/sind.

13. Flüssigkeitszähler gemäß dem Patentanspruch 12, bei dem der/die Durchgang/Durchgänge (170, 219) um die Messleitung (158, 218) herum angeordnet ist/sind.

14. Flüssigkeitszähler gemäß einem der Patentansprüche 10 bis 12, bei dem der/die Durchgang/Durchgänge (258, 292) auf einer einzigen Seite der Messleitung (246, 280) angeordnet ist/sind.

15. Flüssigkeitszähler gemäß einem der Patentansprüche 10 bis 12, bei dem die Durchgänge (184, 186) auf der einen und anderen Seite der Messleitung (182) angeordnet sind.

16. Flüssigkeitszähler gemäß einem der Patentansprüche 9 bis 15, bei dem der/die Durchgang/Durchgänge entlang zumindest eines Teils der Messleitung angeordnet ist/sind.

17. Flüssigkeitszähler gemäß dem Patentanspruch 2 und einem der Patentansprüche 10 bis 16, bei dem sich Rillen/Vorsprungpaare (212, 214, 222, 226) auf der Außenfläche der Messleitung befinden.

18. Flüssigkeitszähler gemäß dem Patentanspruch 10, bei dem der/die Durchgang/Durchgänge in der Messleitung (320) angeordnet sind.

19. Flüssigkeitszähler gemäß dem Patentanspruch 14, bei dem das Messgerät auf der Seite, wo der/die Durchgang/Durchgänge angeordnet sind, eine sogenannte Trennwand (288) zum Trennen der Messleitung (280) des/der Durchgangs/Durchgänge (292) besitzt.

20. Flüssigkeitszähler gemäß dem Patentanspruch 19, bei dem das Messgerät eine andere Wand (290) besitzt, die, im Vergleich zur Trennwand (288), so angeordnet ist, dass die Flächen, im Vergleich zu diesen beiden Wänden, den/die Durchgang/Durchgänge (292) begrenzen.

21. Flüssigkeitszähler gemäß dem Patentanspruch 20, bei dem die andere Wand (290) sich an dem Messgerät befindet.

22. Flüssigkeitszähler gemäß einem der Patentansprüche 1 bis 5, der eine Messleitung (478, 492, 502) umfasst, die zumindest teilweise den Ultraschall-Messweg bildet und der mindestens eine Umfangswand (483) besitzt, die dem Durchgang entspricht, in dem sich die unerwünschten Ultraschallwellen ausbreiten.

23. Flüssigkeitszähler gemäß den Patentansprüchen 2 und 22, bei dem die Fläche, auf der sich die Rillen (488) befinden, der Außenfläche (486) der Messleitung (478) entspricht. Die Reduzierung des Durchgangsquerschnitts jedes Durchgangsteils befindet sich auf der rechten Seite jeder Rille in der besagten Wand.

24. Flüssigkeitszähler gemäß dem Patentanspruch 22 oder 23, bei dem die Messleitung eine Röhre (478, 492, 502) ist.

25. Flüssigkeitszähler gemäß dem Patentanspruch 24, bei dem die Rillen (488, 496) eine ringförmige Form haben und entlang der Röhre angeordnet sind.

26. Flüssigkeitszähler gemäß dem Patentanspruch 24, bei dem eine spiralförmige Rille (504) sich auf der Außenfläche der Messröhre (502) befindet.

## Claims

1. Ultrasonic fluid flow meter (10) containing ultrasonic transducers (26,28;474,476;510,512) placed in contact with the fluid and defining between them a path for ultrasonic measurement and transmitting and receiving ultrasonic waves in the fluid along said measurement path at at least one ultrasonic frequency, means for attenuating so-called parasitic ultrasonic waves of wavelength λ which interfere with reception by one of the transducers of ultrasonic waves transmitted by the other transducer, **characterised in that** the means for attenuation consist of at least one passage (36,38,40;83) in which the fluid flows and in which said parasitic waves propagate in a principal direction that corresponds to a so-called longitudinal dimension a of said passage, said passage having a transverse dimension b that is perpendicular to the dimension a and that is much less than the wavelength λ of the parasitic waves in the propagation medium, said passage including a number of consecutive portions of the passage (46,48;50,52;54,56;58,60) each having a part (46;52;56;60) having a reduced transverse cross section in the direction of dimension b of the passage, the longitudinal dimension of each portion of the passage being essentially equal to λ/2.

2. Fluid flow meter according to claim 1, in which the passage (36,38,40;83) is bounded by at least two longitudinal surfaces (42,44;84,86) separated along dimension b, and on at least one of which a number of consecutive grooves (48;50;54;58;88;96) are formed transversely parallel with each other and alternating with the projections, one pair of grooves/projections being arranged on the right of each portion of the passage.

3. Fluid flow meter according to claim 2, in which each groove (50) has V-shaped profile.

4. Fluid flow meter according to claim 2, in which each groove (48) has a U-shaped profile thus forming slots on said surface.

5. Fluid flow meter according to one of the claims 1 to 4, in which the wavelength of the parasitic waves varies within a predetermined range and the longitudinal dimension of the portions of the passage varies in an increasing or decreasing manner to cover the specific range of wavelengths.

6. Fluid flow meter according to one of the claims 1 to 5, comprising an enclosure (12;142) provided with a fluid inlet orifice (14;144) and a fluid outlet orifice (16;134;146), a measurement unit (18;126;148;190;240;270;316;320) fitted with ultrasonic transducers (26,28;166,168) and provided with at least apertures (20,34;150,152,154;189,191;242;244;284;286;314) respectively permitting the fluid to arrive at the ultrasonic measurement path (30;158;182) and to flow away from it, the passage(s) in which the parasitic ultrasonic waves propagate is(are) arranged between at least one of the inlet and outlet orifices for the fluid and the measurement path.

7. Fluid flow meter according to claim 6, in which said measurement unit (18;126) is placed inside said enclosure (12;120) so as to arrange between the latter the passage(s) (36,38,40;121,122) in which the parasitic ultrasonic waves propagate and which the fluid takes before entering the measurement unit or after leaving it.

8. Fluid flow meter according to claims 2 and 7, in which the surface (44;132) on which the grooves are formed is that of the measurement unit.

9. Fluid flow meter according to claims 6 or 7, in which the measurement unit (148;190;240;270) includes the passage(s) (170;184,186;219;232;258;292) that attenuate the parasitic ultrasonic waves and that is(are) arranged between at least one of said apertures (150,152;180;189,191;242,244;284,286;314) and said measurement path, said passage(s) also serving to carry the fluid.

10. Fluid flow meter according to claim 9, in which the measurement path is formed inside a measuring pipe (158;182;218;246;280;318;320).

11. Fluid flow meter according to claim 10, in which the measuring pipe (158;182;246;280) is at least partially placed in a housing (160;248;272) in the measurement unit.

12. Fluid flow meter according to claim 11, in which the passage (s) (170;184,186;258) is(are) arranged between the walls (176;200,202;260) of the housing and the measurement pipe (158;182;246).

13. Fluid flow meter according to claim 12, in which the passage(s) (170;219) is(are) arranged around the measurement pipe (158;218).

14. Fluid flow meter according to one of the claims 10 to 12, in which the passage(s) (258;292) is(are) arranged on only one side of the measurement pipe (246;280).

15. Fluid flow meter according to one of the claims 10 to 12, in which the passage(s) (184;186) are arranged on each side of the measurement tube (182).

16. Fluid flow meter according to one of the claims 9 to 15, in which the passage(s) is(are) arranged along at least one part of the measurement path.

17. Fluid flow meter according to claim 2 and one of the claims 10 to 16, in which the pairs of grooves/projections (212,214;222,226) are formed on the external surface of the measurement pipe.

18. Fluid flow meter according to claim 10, in which the passage(s) is(are) arranged inside the measurement pipe (320).

19. Fluid flow meter according to claim 14, in which the measurement unit contains on the side where the passage(s) is(are) arranged a so-called separating wall (288) that separates the measurement pipe (280) from the passage(s) (292).

20. Fluid flow meter according to claim 19, in which the measurement unit includes another wall (290) that is arranged with respect to the separating wall (288) so that the surfaces of these two walls define the passage(s) (292).

21. Fluid flow meter according to claim 20, in which the other wall (290) is a part attached to the measurement unit.

22. Fluid flow meter according to one of the claims 1 to 5, comprising a measurement pipe (478;492;502) that at least partially forms the ultrasonic measurement path and that possesses at least one surrounding wall (483) that corresponds to the passage in which the parasitic ultrasonic waves propagate.

23. Fluid flow meter according to claims 2 and 22, in which the surface on which the grooves (488) are formed is the outer surface (486) of the measurement pipe (478), the reduction of the cross section of each portion of the passage being situated on the right of each groove in said wall.

24. Fluid flow meter according to claim 22 or 23, in which the measurement pipe is a tube (478;492;502).

25. Fluid flow meter according to claim 24, in which the grooves (488,496) have an annular shape and are arranged along the tube.

26. Fluid flow meter according to claim 24, in which a spiral-shaped groove (504) is formed on the outer surface of the measurement tube (502).
